# EUROPEAN PATENT SPECIFICATION

(11) **EP 0 844 270 B1**
(45) Date of publication and mention of the grant of the patent: **17.11.2004**
(21) Application number: 97120269.2
(22) Date of filing: 19.11.1997
(51) Int. Cl.: C08J 3/12

(54) **Water absorbing agent and method of producing the same**
Wasserabsorbierendes Mittel und Verfahren zu seiner Herstellung
Agent absorbant l'eau et son procédé de préparation

(30) Priority: 20.11.1996 JP 32603396
(43) Date of publication of application: 27.05.1998
(73) Proprietor: Sanyo Chemical Industries, Ltd., Kyoto 605-0995 (JP)
(72) Inventor: Inoue, Shigeo, Sanyo Chemical Industries, Ltd., Shiga-ken, 520-23 (JP); Takeda, Shigeaki, Sanyo Chemical Industries, Ltd., Otsu-shi, Shiga-ken, 520-02 (JP); Nagasaki, Osamu, Sanyo Chemical Industries, Ltd., Kurita-gun, Shiga-ken, 520-30 (JP); Date, Masashi, Sanyo Chemical Industries, Ltd., Kawanishi-shi, Hyogo-ken, 666 (JP); Tanaka, Kenji, Sanyo Chemical Industries, Ltd., Otsu-shi, Shiga-ken, 520-21 (JP)
(74) Representative: VOSSIUS & PARTNER

(56) References cited:
- EP-A- 0 450 922
- US-A- 5 064 582
- US-A- 5 122 544

## Description

The present invention relates to a water absorbing agent excellent in absorbency and absorption speed, which is produced by compression molding fine particles of a water absorbent resin under specific conditions, and to a method of producing the same.

In the manufacturing process for a water absorbent resin, screening by a sieve is usually used for adjusting the particle size in order to obtain water absorbent resin particles having a particle size in an appropriate range. Particularly in recent years, for the purposes of preventing the flying of fine particles in handling a powdery water absorbent resin and providing a safer environment for an operator by reducing the chance of inhaling fine particles, there has been a strong need to reduce the amount of fine particles contained in a water absorbent resin as much as possible. In order to satisfy such needs, fine particles usually have been removed by screening. However, such fine particles removed are usually disposed of because they have a low value for reuse. Therefore, the yield is decreased, and also a cost for discarding the fine particles arises, resulting in an increase of manufacturing cost. Because of this background, the importance of how to effectively utilize fine particles removed by screening has increased.

In order to utilize fine particles effectively, for example, (1) a method of reusing fine particles by adding them for recycling (in a polymerization solution or in a hydrogel polymer) in a process of manufacturing a water absorbent resin (e.g. JP-A-4-41532, JP-A-4-227705, JP-A-4-348103), and (2) a method of binding fine particles or fine particles-containing powder with a binder to produce a large particle aggregate (e.g. JP-A-62-132936, JP-A- 2-284927, JP-A-2-227435, JP-A-3-137129, JP-A-4-214736), have been proposed.

However, because such fine particles added for recycling are reprocessed again by drying and pulverizing in the method (1), the resultant water absorbent resin exhibits a reduced absorbency as the amount of the fine particles added for recycling is increased. Furthermore, in the method (2), because the mechanical strength of the resultant particle aggregate is not sufficient, the particle aggregate is broken and fine particles are reproduced when an external force such as mechanical shock, frictional force, vibration during transportation or the like is applied thereon. The amount of the binder added may be increased, or a crosslinking agent may be used with a binder, for enhancing the binding force so as to reduce such problems. However, such methods may result in a reduction in the absorption speed of the resultant water absorbent resin.

An object of the present invention is to provide a water absorbing agent, which is produced from a powder containing fine particles of a water absorbent resin, having excellent absorbency, and from which few fine particles are reproduced on exertion of an external force such as mechanical shock, frictional force, vibration during transportation or the like, and a method of producing the same.

This object has been achieved by a water absorbing agent having an average particle diameter of 200 to 1000 µm, which is produced by compression molding a powdery water absorbent resin (A), which comprises not less than 30 % by mass of fine particles having a diameter of 150 µm or less, under a face pressure of not less than 50 kg/cm² or a linear pressure of not less than 25 kg/cm in the presence of water. Optionally drying and/or pulverizing may be carried out. In a method of producing the agent of the present invention water is mixed with the powdery water absorbent resin (A) comprising not less than 30 % by mass of fine particles having a diameter of 150 µm or less, and the mixture is compression molded under a face pressure of not less than 50 kg/cm² or a linear pressure of not less than 25 kg/cm. Optionally, drying and/or pulverizing may be carried out.

In the present invention, examples of the water absorbent resin (A) include powdery or granular water absorbent resins such as crosslinked copolymers of starch-acrylic acid salt, crosslinked polyacrylic acid salt, self-crosslinked polyacrylic acid salt, saponified crosslinked copolymers of acrylate/vinyl acetate, crosslinked copolymers of isobutylene/maleic anhydride, crosslinked polysulfonic acid salt, crosslinked copolymers of acrylic acid salt/sulfonic acid salt, crosslinked copolymers of acrylic acid salt/acrylamide, or modified cellulose derivatives. The water absorbent resin can be swelled with water, but is essentially water insoluble, and therefore it is different from a water soluble resin.

The method of producing the water absorbent resin (A) is not particularly limited, and it can be produced by any methods including polymerizing an aqueous solution in the presence of a crosslinking agent, reversed phase suspension polymerization in the presence or absence of a crosslinking agent, irradiation polymerization, or post-crosslinking of a water soluble resin.

The water absorbent resin (A) is preferably an anionic water absorbent resin, comprising an acrylic acid and an acrylic acid salt as main components of a monomer unit, and capable of absorbing and retaining a large amount of liquid by ionic osmosis pressure, but releasing little water on exertion of a load or an external force, and specifically an anionic water absorbent resin which is produced by polymerizing in an aqueous solution, particularly in the presence of a crosslinking agent is preferable.

An acrylic acid and an acrylic acid salt are usually used at a ratio of (20 to 50) : (80 to 50) by mole %, preferably (20 to 40) : (80 to 60) by mole %. When the ratio of the acrylic acid is within the above-mentioned range, the pH of the water absorbent resin becomes neither alkaline nor acidic when water is absorbed, so that it is desirable in terms of safety for the skin. Further, a water absorbent resin having high absorbency can be obtained in the above-mentioned range. The kind of the salt component of the acrylic acid salt is not particularly limited, but it is usually a salt of an alkali metal such as sodium or potassium.

Also, a water absorbent resin further crosslinked in the vicinity of the surface of the powder by a conventional method using a crosslinking agent such as a polyglycidyl ether compound, a polyol compound, a polyamine compound, or a polyvalent metal compound can be preferably used in the present invention.

The powder that contains fine particles of the water absorbent resin (A) (hereinafter referred to as the fine particles-containing resin powder) used in the present invention contains fine particles having a diameter of 150 µm or less at not less than 30 % by mass, preferably not less than 50 % by mass, more preferably not less than 70 % by mass. When the fine particles-containing resin powder contains fine particles having a diameter of 150 µm or less at less than 30 % by mass, problems such as abrasion of a compression molding apparatus, increased pressure fluctuation during molding, or decreased yield of molded products may result.

The shape of the fine particles-containing resin powder is not particularly limited. Examples include powder, lamellae, granules, sphere and the like, but powder is preferable. Furthermore, the amount of water contained in the fine particles-containing resin powder is not particularly limited, but it is usually 0.1 to 10 % by mass, preferably 1 to 8 % by mass.

The fine particles-containing resin powder preferably has an absorbency under a pressure-free state of 40 g/g or more, and an absorbency under load of 20 g/g or more with respect to physiological saline solution. More preferably, the fine particles-containing resin powder has an absorbency under a pressure-free state of 45 to 75 g/g and an absorbency under load of 22 to 55 g/g. "Absorbency" herein refers to the maximum amount of weight (unit: g) of physiological saline solution that 1 g of a water absorbent resin can absorb.

The water absorbing agent of the present invention is produced in the presence of water. Although it is preferable to use water alone in view of safety in handling and cost performance, an aqueous liquid of a mixture of water and a hydrophilic organic solvent (for example, methanol, ethanol, ethylene glycol, or glycerine) also can be used as needed. When using such an aqueous liquid mixture, the content of the hydrophilic organic solvent is not more than 40 %, preferably not more than 30 %, of the total mixture on a mass basis.

The amount of water or the aqueous liquid mixture used is usually 2 to 80 %, preferably 3 to 60 %, more preferably 5 to 50 % with respect to the fine particles-containing resin powder on a mass basis.

If the amount of water is too large, the fine particles-containing resin powder absorbs water to be swelled so that the powder may lack the needed shaping property during compression molding, even if an increased pressure is applied. On the other hand, if the amount of water is too small, the binding force of the fine particles with each other becomes low, so that the binding effect of the compression molding may be reduced.

"In the presence of water" used in the present invention does not mean only adding water to the fine particles-containing resin powder, but also using fine particles-containing resin powder that already contains water.

In the present invention, a water soluble and/or water dispersive resin (B) can be contained in water in the compression molding process as needed, in order to improve the strength of the compression molded products.

Either a natural high molecular compound or a synthetic high molecular compound can be used as the water soluble resin of (B). Examples of a natural high molecular compound include starches (solubilized starch, or α-starch), cellulose derivatives (carboxymethyl cellulose, or hydroxyethyl cellulose), sodium alginate, guar gum, xanthane gum, gum arabic, locust bean gum, carrageenan, mannan, gluten, or chitosan. Examples of a synthetic high molecular compound include polyvinyl alcohol, polyvinyl pyrrolidone, polyethylene oxide, polyethylene glycol, sodium polyacrylate, or polyvinyl ether compound.

Examples of a water dispersive resin include synthetic resin emulsions (for example, acrylic resin emulsion, polyolefin based resin emulsion, or polyurethane resin emulsion), natural or synthetic wax emulsion, or natural or synthetic rubber emulsion.

These examples of the water soluble and/or water dispersive resin (B) can be used either alone or in combinations of two or more.

The water soluble and/or water dispersive resin (B) is usually used at 0.01 to 20 %, preferably 0.1 to 10% with respect to the fine particles-containing resin powder on a mass basis. When used in this range, there is little reduction in the absorbency of the resultant water absorbing agent, and therefore it is preferable.

By "the water soluble and/or water dispersive resin (B) is contained in water at the compression molding" is herein understood not only dissolving the resin (B) in water in advance, but also having the resin (B) contained in advance in the fine particles-containing resin powder and then adding water thereto, so that the resin (B) can move into the water side and is partially dissolved and/or dispersed in the water.

In the present invention, in order to enhance the strength of the compression molded products and to improve the shape retaining property of a swelled hydrogel, a crosslinking agent (C) having two or more function groups reactive with a functional group of the fine particles-containing resin powder (for example, a carboxyl group) can be contained in water at the compression molding.

Examples of the crosslinking agent (C) include traditionally known polyglycidyl compound, polyamine, polyisocyanate, polyaziridine polyhydric alcohol, or alkylene carbonate. Such examples may be used either alone or in combinations of two or more as the crosslinking agent (C). Polyglycidyl compounds such as ethylene glycol diglycidyl ether, polyethylene glycol polyglycidyl ether, glycerol polyglycidyl ether, or polyglycerol polyglycidyl ether are preferably used. The rate of the crosslinking agent (C) used is determined depending on the performance of the used water absorbent resin (A), but it is usually 0.003 to 5.0%, preferably 0.005 to 2%, more preferably 0.01 to 1 % with respect to the fine particles-containing resin powder on a mass basis. When using polyglycidyl compound as the crosslinking agent, heat treating is preferably carried out at 80 to 160 °C, more preferably at 100 to 150°C during or after the compression molding. When using polyhydric alcohol, alkylene carbonate or the like as the crosslinking agent, heat treating is preferably carried out at 160 to 230 °C, more preferably at 180 to 220 °C, during or after the compression molding in view of the higher reactivity.

Examples of an industrial apparatus used for adding water to the fine particles-containing resin powder include mechanical blenders such as a conical blender, Nauta blender, double arm type kneader, V-shaped rotating mixer, fluidized bed layer mixer, turbulizer, screw type inline blender, ribbon blender, or mortar mixer. However, it is not limited to these examples as long as it is capable of mixing uniformly. When mixing fine particulate inorganic materials, such as silica, alumina or titanium dioxide, with the fine particles-containing resin powder in advance and then adding water to the mixture, an undissolved powder lump does not form and water can be uniformly distributed throughout the fine particles-containing resin powder, and therefore it is preferable. The above-mentioned inorganic materials are usually added in an amount of 0 to 5 % by mass with respect to the fine particles-containing resin powder.

Examples of methods for compression molding the fine particles-containing resin powder in the presence of water in the present invention are described as follows:
① After mixing the fine particles-containing resin powder and water, the mixture is compression molded in a mold having a desired shape and size.
② After mixing the fine particles-containing resin powder and water, the mixture is compression molded into a sheet, rod, or block shape, and then pulverized and adjusted to a desired particle size.
③ The fine particles-containing resin powder containing water is heated, so that compression molding can be carried out under a condition of evaporating the water present in the fine particles-containing resin powder.

Examples of an industrial compression molding machine include a roll type compactor (Briquetting machine, roller compactor or the like), an extruder with perforate plate (disk pelleter or the like), a piston type compactor, and a press type compactor. However, it is not limited to these examples.

The pressure at the compression molding may be changed as appropriate depending upon the type, size or properties of the fine particles-containing resin powder, the amount of the water added, presence or absence of the (B) and/or (C), or the amount of the (B) and/or (C). However, it is a face pressure of not less than 50 kg/cm² or a linear pressure of not less than 25 kg/cm. Preferably, it is a face pressure of from 50 kg/cm² to 10 ton/cm² or a linear pressure of from 25 kg/cm to 5 ton/cm. More preferably, it is a face pressure of from 100 kg/cm² to 6 ton/cm² or a linear pressure of from 50 kg/cm to 3 ton/cm.

If the face pressure is less than 50 kg/cm² or the linear pressure is less than 25 kg/cm, the molded products will be lacking in a shaping property, and the resultant molded product may be easily broken on exertion of an external force. Furthermore, if the face pressure exceeds 10 ton/cm² or the linear pressure exceeds 5 ton/cm, the shaping property and stability of shape retention against an external force of the molded product can be further improved. However, a larger apparatus is required and also the resultant molded product may exhibit a reduced absorption speed. Therefore, the above specified range of a face pressure of from 50 kg/cm² to 10 ton/cm², or a linear pressure of from 25 kg/cm to 5 ton/cm is preferable.

The temperature at the compression molding is not particularly limited. Although the compression molding can be carried out at room temperature, it may be carried out while heated (for example, at from 30 to 200°C, preferably at from 80 to 150°C) as needed. Particularly, if the compression molding is carried out while heated at 80°C or more, water normally contained in the fine particles-containing resin powder evaporates. Because the water functions as a binder, a step of adding water to the fine particles-containing resin powder is not necessarily required. When water containing crosslinking agent (C) is used, the temperature at the compression molding can be selected depending upon the reactivity of (C).

The shape of the water absorbing agent obtained by the compression molding is not particularly limited, and examples include powder, sphere, pea-shape, cube, polyhedron, flat plate, sheet, rod, block or any other shape.

The compression molded water absorbing agent usually has a density of not less than 0.3 g/cm³, preferably 0.4 to 1.6 g/cm³, more preferably 0.5 to 1.5 g/cm³ When the density of the molded water absorbing agent is not less than 0.3 g/cm³, even if an external force such as mechanical shock, frictional force or vibration during transportation is applied, it cannot be broken to reproduce fine particles, and therefore it is desirable.

In order to adjust the amount of water contained in the molded product, drying may be performed after the compression molding, if required, depending upon the amount of the water present during the compression molding. If the amount of the water present during the compression molding is 2 to 9 % by mass, drying usually can be skipped. However, if the amount of the water present exceeds 9 % by mass, drying is preferably preformed.

The water absorbing agent of the present invention is preferably obtained by molding particles directly with a compression molding machine, or by pulverizing a molded sheet or flat plate product produced by compression molding. If the latter method is used, a sheet having a thickness of 1 to 10 mm, preferably 2 to 8 mm, is usually used.

The above-mentioned molded product, which is dried as needed, is pulverized by a normal method, if required, and the particle size is adjusted to have an average particle diameter of 200 to 1000 µm, to produce the water absorbing agent of the present invention. The water absorbing agent of the present invention preferably has an average particle diameter of 250 to 900 µm, more preferably 280 to 800 µm. If the average particle diameter exceeds 1000 µm, the surface area of the particles may be too small so that the absorption speed is reduced. On the other hand, if the average particle diameter is less than 200 µm, such effects as preventing particles from flying or reducing the chance of inhaling particles by an operator are lowered, and therefore it is undesirable. "An average particle diameter" is usually determined by measuring the particle size distribution (by mass content percentage) and plotting the cumulative content percentage of particles passed through each sieve in relation to the mesh opening size of the sieve on a logarithmic normal probability paper.

Particularly, when used in absorbent articles such as hygienic materials (for example, disposable diaper, sanitary napkin, incontinence pads or the like) or sheet type absorbent articles (for example, pet sheets, drip absorbing sheets, or anti-dewing sheets), the water absorbing agent of the present invention preferably has a particle size comprising 90 % by mass, more preferably 95 % by mass, of particles having a diameter of 100 to 850 µm.

The thus obtained compression molded particle product can be used as a water absorbing agent itself, but it is also possible to mix it with a normal water absorbent resin (A') which is not compression molded (preferably comprising 90 % or more by mass of particles having a diameter of 100 to 850 µm) and use it as a water absorbing agent. When using such a mixture, any ratio of the compression molded water absorbing agent and the normal water absorbent resin (A') in the mixture can be chosen, but it is usually 10 to 90 %, preferably 20 to 80 % of the compression molded water absorbing agent with respect to the total mixture on a mass basis.

The water absorbing agent of the present invention may be further surface crosslinked by a usual method. The surface crosslinking can be carried out during or after the compression molding.

Furthermore, in any stage before or after the compression molding, silica, zeolite, an antioxidant, a surfactant, various silicone oils, an antimold agent, an antibacterial agent, deodorant, perfume, or fibrous materials (pulp or synthetic fibers) may be added as needed as an additive or an extender.

The water absorbing agent of the present invention preferably has an absorbency under a pressure-free state of 40 g/g or more, and an absorbency under load of 20 g/g or more with respect to physiological saline solution. More preferably, the water absorbing agent has an absorbency under a pressure-free state of 45 to 70 g/g and an absorbency under load of 22 to 50 g/g.

The present invention will be understood more readily with reference to the following examples; however these examples are intended to illustrate the invention and are not to be construed to limit the scope of the invention. Furthermore, with regard to the water absorbing agent of the present invention, absorbency under a pressure-free state, absorbency under load, absorption speed, mechanical strength, and shape retaining property of a swelled hydrogel were measured according to the methods as described below. Hereinafter, "%" means "% by mass" unless otherwise specified.

Absorbency under a pressure-free state: 1.00 g of a water absorbing agent was placed in a tea bag of 10 × 20 cm size made of 250 mesh nylon fabric, and soaked in an excess amount of physiological saline solution (0.9% sodium chloride aqueous solution) for 30 minutes. Then the tea bag was hung vertically to drain solution off for 15 minutes. The increased mass was measured and the value was defined as the absorbency under a pressure-free state.

Absorbency under load: 0.100 g of a water absorbent agent was placed in a plastic cylinder with a 250 mesh nylon fabric attached on the bottom (internal diameter 28 mm, height 50 mm) and spread uniformly. A weight with an external diameter of 28 cm was placed thereon such that a load of 20 g/cm² is applied. Then the cylinder was placed in the center of a Petri dish (diameter 11 cm) containing 25 ml of physiological saline solution with the nylon fabric side as the bottom side. After soaking for 30 minutes, 10 times of the value of the increased mass was measured and defined as the absorbency under load.

Absorption speed: 50 g of physiological saline solution and a magnetic stirrer piece were placed in a beaker of 100 ml, and 2.0 g of a water absorbing agent was put therein smoothly while stirring at 600 rpm. The time from completion of introducing the water absorbing agent up to when the water absorbing agent was swelled with physiological saline solution and gelatinized so that the liquid surface becomes even was measured, and was defined as the absorption speed.

Mechanical strength: 100 g of a water absorbing agent, whose particle size distribution was measured in advance, and 15 ceramic balls (diameter 18 mm) were placed in a ball mill having a capacity of 400 ml. Then the mechanical strength of the water absorbing agent was tested by rotating the ball mill at 120 rpm for 10 minutes. After the test was completed, the particle size distribution was measured to determine the increased amount of fine particles having a diameter of 100 µm or less, and evaluation was made according to the following basis.
- ⓞ:: The amount of fine particles having a diameter of 100 µm or less was increased by less than 3 %.
- ○:: The amount of fine particles having a diameter of 100 µm or less was increased by at least 3 % but less than 5 %.
- Δ:: The amount of fine particles having a diameter of 100 µm or less was increased by at least 5 % but less than 10 %.
- ×:: The amount of fine particles having a diameter of 100 µm or less was increased by 10 % or more.

Shape retaining property of a swelled hydrogel after absorption: Hydrogel that absorbed a 25 fold amount of physiological saline solution was prepared by the same method as the measurement of absorption speed. After being allowed to stand for one hour under sealing condition at 40 °C, the swelled hydrogel was picked up and leveled. A pressure was applied to the swelled hydrogel by pushing with the palm of a hand, and the result was evaluated according to the following basis of four grades.
- ⓞ:: The swelled hydrogel has good dryness feeling, and also retains its shape after absorption when pressure is applied.
- ○:: The swelled hydrogel has dryness feeling, but it partially deforms and produces fine particles when pressure is applied.
- Δ:: The swelled hydrogel has less dryness feeling and partially becomes paste-like when pressure is applied.
- ×:: The swelled hydrogel mostly becomes paste-like when pressure is applied.

Method of measuring an average particle diameter: Particle size distribution was measured by screening as follows: a sieve shaker (specified by JIS R6002), provided with JIS standard sieves specified by JIS RZ8801 of 20 mesh (mesh opening: 850 µm), 26 mesh (mesh opening: 600 µm), 30 mesh (mesh opening: 500 µm), 50 mesh (mesh opening: 300 µm), 60 mesh (mesh opening: 250 µm), 100 mesh (mesh opening: 150 µm) and 140 mesh (mesh opening: 106 µm), respectively, and a saucer, was prepared. 50 g of a sample was placed on the 20 mesh sieve and the lid was put on, then shaken for 10 minutes, and the particle size distribution (expressed by mass percentage) was measured. Further, if required, standard sieves of 16 mesh (mesh opening: 1000 µm) and 14 mesh (mesh opening: 1180 µm) may be additionally provided to carry out the measurement.

An average particle diameter was determined from the obtained particle size distribution as follows: the cumulative content percentage (by mass percentage) of particles passed through each sieve was plotted in relation to the mesh opening size of the sieve on a logarithmic normal probability paper. The micron number at which the cumulative content percentage became 50 % was determined in this graph and defined as the average particle diameter of the sample.

### Example 1

A commercially available water absorbent resin ("SANWET IM-6320", product of Sanyo Chemical Industries, Ltd., surface crosslinked polyacrylic acid salt; water content 1.2 %) was sifted with a 100 mesh JIS standard sieve (mesh opening: 150 µm) and the fine particles (a) passed through the sieve were collected. 20 % of water was added to (a) and mixed together with a small type turbulizer (produced by HOSOKAWA Micron CORPORATION), and then compression molded into particles having a diameter of about 1 mm with a Briquetting machine under a face pressure of 2 ton/cm² at room temperature. Then the particles were dried to a water content of 5 %, and a water absorbing agent (1) was obtained. The water absorbing agent (1) had an average particle diameter of 910 µm and density of 0.93 g/cm³. The results of measuring the performance of the water absorbing agent (1) are shown in Table 2.

### Example 2

20 % of water was added to the fine particles (a) with the same apparatus as Example 1, and then compression molded into a sheet with a roller compactor (produced by Nakata SEISAKUSYO) under a linear pressure of 1 ton/cm at room temperature. The compression molded product was dried to a water content of 5%, pulverized with a roller mill, and then the particle size was adjusted to obtain a water absorbing agent (2) having a particle size of 100 to 850 µm. The water absorbing agent (2) had an average particle diameter of 440 µm and density of 0.92 g/cm³. The results of measuring the performance of the water absorbing agent (2) are shown in Table 2.

### Examples 3 to 6

Water absorbing agents (3) to (6) were produced respectively by the same method as described in Example 2 except that the amount of the added water and/or the linear pressure at the compression molding were changed as shown in Table 1. The results of measuring the average particle diameter and the density of these water absorbing agents are shown in Table 1.

The results of measuring the performance of the obtained water absorbing agents (3) to (6) are shown in Table 2.

### Example 7

A water absorbing agent (7) was produced by the same method as described in Example 2 except that 10 % sodium alginate aqueous solution was used in place of water in the same amount (2 % of sodium alginate with respect to the fine particles (a)). The water absorbing agent (7) exhibited an average particle diameter of 460 µm and a density of 0.90 g/cm³. The results of measuring the performance of the water absorbing agent (7) are shown in Table 2.

### Example 8

A commercially available water absorbent resin ("SANWET IM-5000D", product of Sanyo Chemical Industries, Ltd., crosslinked polyacrylic acid salt; water content 5.6 %) was sifted with a 100 mesh JIS standard sieve (mesh opening: 150 µm) and fine particles (b) passed through the sieve were collected. 0.1 % of fine particulate hydrophilic silica ("Aerosil 200"); Product of NIPPON AEROSlL CO., LTD) was added to (b) and mixed with a small type turbulizer, and further 20 % of water was added to the mixture and mixed together. The mixture was compression molded into a sheet with a roller compactor under a linear pressure of 1 ton/cm at room temperature. The compression molded product was dried to a water content of 5 %, pulverized with a roller mill, and then the particle size was adjusted to obtain a water absorbing agent (8) having a particle size of 100 to 850 µm. The water absorbing agent (8) had an average particle diameter of 430 µm and density of 0.83 g/cm³. The results of measuring the performance of the water absorbing agent (8) are shown in Table 2.

### Example 9

The fine particles (b) obtained in the Example 8 were compression molded into a sheet with a roller compactor heated to 140 °C under a linear pressure of 3 ton/cm. Evaporation of vapor was observed during the compression molding. After the compression molded product (a water content of 1.4%) was pulverized with a roller mill, the particle size was adjusted to obtain a water absorbing agent (9) having a particle size of 100 to 850 µm. The water absorbing agent (9) had an average particle diameter of 380 µm and density of 0.93 g/cm³. The results of measuring the performance of the water absorbing agent (9) are shown in Table 2.

### Example 10

A water absorbing agent (10) was produced by the same method as the Example 8 except that 0.2 % by mass of ethylene glycol diglycidyl ether was used in place of water in the same amount (0.04% of ethylene glycol diglycidyl ether with respect to the fine particles (B)). The water absorbing agent (10) had an average particle diameter of 420 µm and density of 0.84 g/cm³. The results of measuring the performance of the water absorbing agent (10) are shown in Table 2.

### Example 11

40 g of the water absorbing agents (5) obtained in the Example 5 were mixed uniformly with 60 % of "SANWET IM-6320" in a V-shaped rotating mixer to obtain a water absorbing agent (11). The water absorbing agent (11) had an average particle diameter of 390 µm and density of 0.77 g/cm³. The results of measuring the performance of (11) are shown in Table 2.

### Comparative Examples 1 and 2

The fine particles (a) produced from the water absorbent resin used in the Example 1 ("SANWET IM-6320"; absorbency under a pressure-free state of 54 g/g, absorbency under load of 31 g/g, absorption speed of 35 seconds) were used as the comparative water absorbing agent (1'), and the fine particles (b) produced from the water absorbent resin used in the Example 8 ("SANWET IM-5000D"; absorbency under a pressure-free state of 50 g/g, absorbency under load of 30 g/g, absorption speed of 28 seconds) were used as the comparative water absorbing agent (2'). The results of measuring the performance of these fine particles are shown in Table 2.

### Comparative Example 3

A water absorbent resin "SANWET IM-6320" was sifted with a 50 mesh JIS standard sieve (mesh opening: 300 µm) and fine particles (c) passed through the sieve were collected. When the particle size distribution was measured, fine particles having a diameter of 150 µm or less were contained at a rate of about 28 %. 20 % of water was added to the fine particles (c) and mixed with a small type turbulizer, and then compression molded into particles having a diameter of about 1 mm with a briquetting machine under a face pressure of 2 ton/cm² at room temperature. Then the particles were dried to a water content of 5 % and a comparative water absorbing agent (3') was obtained. The comparative water absorbing agent (3') had an average particle diameter of 860 µm and density of 0.85 g/cm³. The results of measuring the performance of the comparative water absorbing agent (3') are shown in Table 2.

### Comparative Example 4

A comparative water absorbing agent (4') was produced by the same method as described in Example 1 except that the face pressure at the compression molding was 40 kg/cm². The comparative water absorbing agent (4') had an average particle diameter of 880 µm and density of 0.82 g/cm³. The results of measuring the performance of the comparative water absorbing agent (4') are shown in Table 2.

### Comparative Example 5

Using the fine particles (a) obtained in the Example 1, an agglomerated product was produced according to the Example 12 in JP-A-62-132936. That is, 50 g of fine particles (a) were first placed in a 500 ml four neck round bottom flask provided with an agitator, a reflux condenser, a water separator, a dropping funnel and a nitrogen gas introducing tube. Then 300 ml of normal heptane and 2.5 g of sorbitan monolaurate were added thereto, and then 45.5 g of water was slowly poured therein with a dropping funnel while stirring. After adding 0.68 g of fine particulate silica to the suspension, water and normal heptane were removed from the suspension by distillation while stirring. Then it was further dried, and an agglomerated product was obtained. The particle size of the agglomerated product was adjusted to obtain a comparative water absorbing agent (5') having a particle size of 100 to 850 µm. The comparative water absorbing agent (5') had an average particle diameter of 450 µm and density of 0.62 g/cm³. The results of measuring the performance of the comparative water absorbing agent (5') are shown in Table 2.

**[Table 1]**

| Example | Water Absorbing Agent | The Amount of Water Added (%) | Linear pressure (ton/cm) | Average Particle Diameter (µm) | Density (g/cm³) |
|---|---|---|---|---|---|
| 3 | (3) | 10 | 1 | 420 | 0.85 |
| 4 | (4) | 40 | 1 | 480 | 0.82 |
| 5 | (5) | 20 | 0.1 | 430 | 0.79 |
| 6 | (6) | 20 | 6 | 520 | 1.38 |

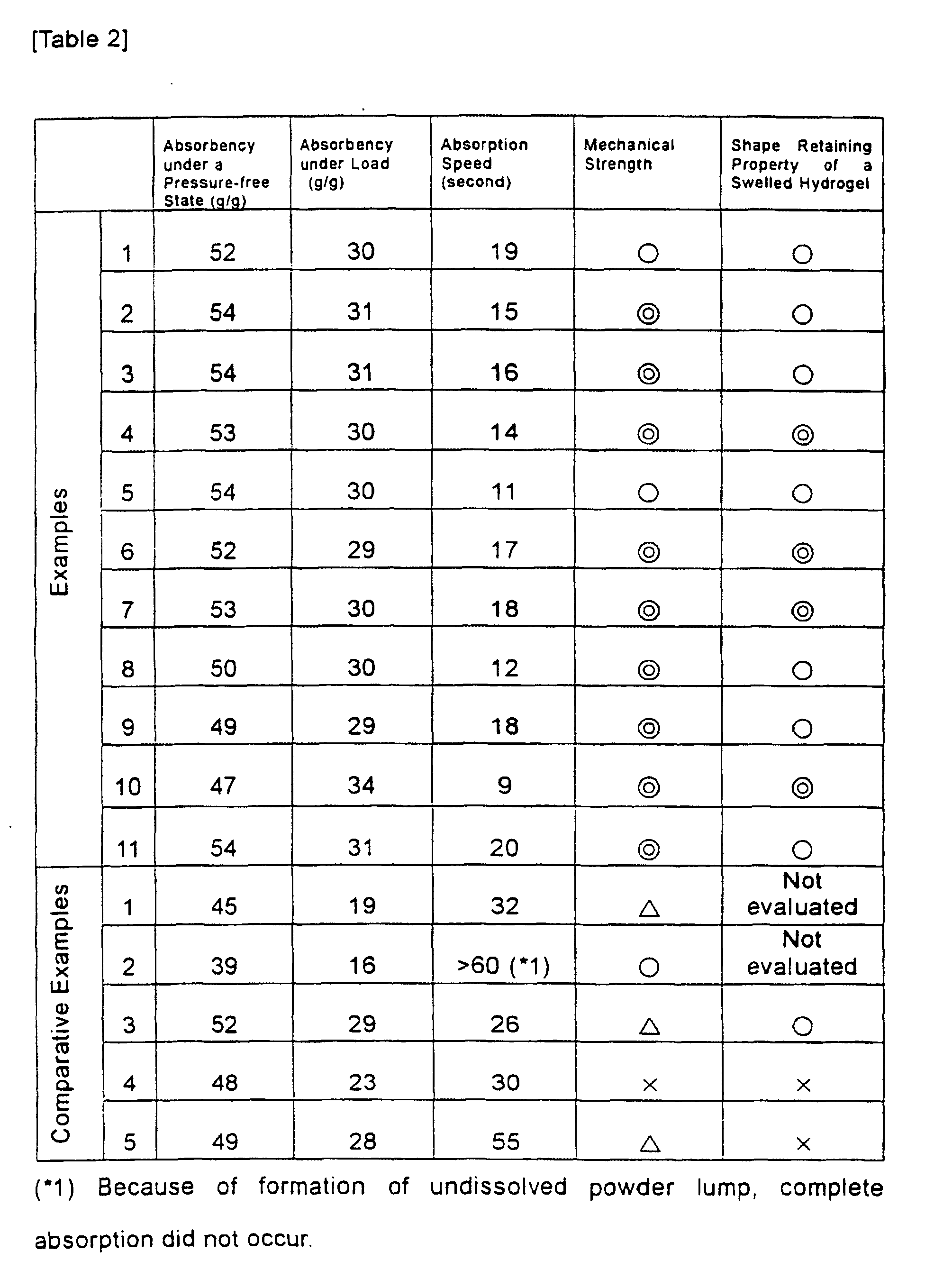

The water absorbing agent of the present invention, which is produced by the method of the present invention, has the following characteristics and effects:
① The water absorbing agent of the present invention has excellent absorbency under pressure-free state and under load like a conventional powdery or granular water absorbent resin.
② The water absorbing agent of the present invention does not form undissolved powder lump when absorbing an aqueous fluid, so that it exhibits excellent absorption speed even though fine particles are used as a starting material.
③ The water absorbing agent of the present invention has excellent mechanical strength compared to particle aggregate products proposed in the prior art, and has a mechanical strength as strong as a conventional water absorbent resin. Therefore, it can be handled in the same manner as a conventional water absorbent resin.
④ Because flying fine particles are few, the chance of inhalation of fine particles by an operator is low, so that a safer environment can be provided for an operator.
⑤ By having a water soluble resin or a crosslinking agent present in water in a process of producing the water absorbing agent of the present invention, it is provided with a further improved shape retaining property when an external force is applied to a gel after absorption, so that fine particulate hydrogel is not formed easily. Therefore, it can be more preferably used in hygienic materials such as a diaper.

Thus, the water absorbing agent of the present invention exhibits such effects as mentioned above, so that it can be most preferably used for hygienic materials (for example, disposable diapers for infants or adults, sanitary napkin, incontinence pads, under pads for surgical operations, mother breast pads, parturition mats). Furthermore, it can be preferably used in most utilities for which a conventional water absorbent resin is used, such as sheet type absorbent articles (for example, pet sheets, freshness retaining sheets, drip absorbing sheets, anti-dewing sheets, sheets for rearing a young paddy rice plant, aging sheets for concrete), water retainers for soil, chemical body warmers, cold insulator, sludge solidification, gelling agents for various solutions or body fluids, artificial snow.

## Claims

1. A water absorbing agent having an average particle diameter of 200 to 1000 µm, which is obtainable by compression molding a powdery water absorbent resin (A) comprising not less than 30 % by mass of fine particles having a diameter of 150 µm or less, under a face pressure of not less than 50 kg/cm² or a linear pressure of not less than 25 kg/cm in the presence of water.

2. The water absorbing agent as claimed in claim 1, wherein the production of the water absorbing agent further comprises drying and/or pulverizing.

3. The water absorbing agent as claimed in claim 1 or 2, wherein the water absorbent resin (A) is an anionic water absorbent resin obtainable by polymerizing in an aqueous solution in the presence of a crosslinking agent, using acrylic acids and acrylic acid salts of an alkali metal as main components of the monomer units.

4. The water absorbing agent as claimed in any of claim 1 to 3, wherein the ratio of the water is 3 to 60 % with respect to the water absorbent resin (A) on a mass basis.

5. The water absorbing agent as claimed in any of claims 1 to 4, wherein the water used contains a water soluble and/or water dispersive resin (B), and the content of the (B) is 0.01 to 20 % by mass with respect to the (A).

6. The water absorbing agent as claimed in any of claims 1 to 5, wherein the water used contains a crosslinking agent (C) having two or more functional groups reactive with a functional group of the (A), and the ratio of the (C) is 0.003 to 5.0 % by mass with respect to the (A).

7. The water absorbing agent as claimed in claim 6, wherein the crosslinking agent (C) is a polyglycidyl compound.

8. The water absorbing agent as claimed in any of claims 1 to 7, wherein the face pressure is from 100 kg/cm² to 10 ton/cm² or the linear pressure is from 50 kg/cm to 5 ton/cm.

9. The water absorbing agent as claimed in any of claims 1 to 8, wherein the water absorbing agent after the compression molding has a density of 0.4 to 1.5 g/cm³.

10. The water absorbing agent as claimed in any of claims 1 to 9, wherein the particle size is adjusted after the compression molding so that the water absorbing agent comprises not less than 90 % by mass of particles having a diameter of 100 to 850 µm,

11. A water absorbing agent comprising a mixture of the water absorbing agent as claimed in any of claims 1 to 10, and a powdery water absorbent resin (A') which is not compression molded and comprises not less than 90 % by mass of particles having a diameter of 100 to 850 µm.

12. The water absorbing agent as claimed in claim 11, wherein the water absorbent resin (A') comprises 10 to 90 % by mass of the total mixture.

13. A method of producing a water absorbing agent, which comprises mixing water with a powdery water absorbent resin (A) comprising not less than 30 % by mass of fine particles having a diameter of 150 µm or less, and compression molding the mixture under a face pressure of not less than 50 kg/cm² or a linear pressure of not less than 25 kg/cm.

14. The method of producing a water absorbent agent as claimed in claim 13, further comprising drying and/or pulverizing the compression molded mixture.

15. The method of producing a water absorbing agent as claimed in claim 13 or 14, wherein the water used contains a water soluble and/or water dispersive resin (B), and the content of the (B) is 0.01 to 20 % by mass with respect to the (A).

16. The method of producing a water absorbing agent as claimed in any of claims 13 to 15, wherein the water used contains a crosslinking agent (C) having two or more functional groups reactive to a carboxyl group, and the ratio of the (C) is 0.003 to 5.0 % by mass with respect to the (A).

17. The method of producing a water absorbing agent as claimed in claim 13 or 14, wherein the water absorbent resin (A) is mixed with at least one fine particulate inorganic material (D) selected from silica, alumina and titanium dioxide before mixing with water.

18. A method of producing a water absorbing agent, which comprises pulverizing the water absorbing agent as produced according to any of claims 13 to 16 and adjusting the particle size so as to comprise not less than 90 % by mass of particles having a diameter of 100 to 850 µm.

19. The method of producing a water absorbing agent as claimed in claim 17, which comprises further mixing the water absorbing agent with a powdery water absorbent resin powder (A'), which is not compression molded and comprises not less than 90 % by mass of particles having a diameter of 100 to 850 µm.

20. The method of producing a water absorbing agent as claimed in claim 19, wherein the content of (A') in the mixture is 10 to 90% by mass of the total mixture.

## Patentansprüche

1. Wasserabsorbierendes Mittel mit einem mittleren Teilchendurchmesser von 200 bis 1000 µm, welches erhältlich ist durch Pressformen eines pulverförmigen wasserabsorbierenden Harzes (A), das nicht weniger als- 30 Massen-% an feinen Teilchen mit einem Durchmesser von 150 µm oder weniger umfasst, unter einem Flächendruck von nicht weniger als 50 kg/cm² oder einem linearen Druck von nicht weniger als 25 kg/cm in Gegenwart von Wasser.

2. Wasserabsorbierendes Mittel gemäß Anspruch 1, wobei die Herstellung des wasserabsorbierenden Mittels weiterhin Trocknen und/oder Pulverisieren umfasst.

3. Wasserabsorbierendes Mittel gemäß Anspruch 1 oder 2, wobei das wasserabsorbierende Harz (A) ein anionisches wasserabsorbierendes Harz ist, das durch Polymerisieren in einer wässrigen Lösung in Gegenwart eines Vernetzungsmittels erhältlich ist, wobei Acrylsäuren und Acrylsäuresalze eines Alkalimetalls als Hauptkomponenten der Monomereinheiten verwendet werden.

4. Wasserabsorbierendes Mittel gemäß einem der Ansprüche 1 bis 3, wobei das Verhältnis von Wasser, bezogen auf das wasserabsorbierende Harz (A), 3 bis 60 % auf Basis der Masse beträgt.

5. Wasserabsorbierendes Mittel gemäß einem der Ansprüche 1 bis 4, wobei das verwendete Wasser ein wasserlösliches und/oder in Wasser dispergierbares Harz (B) enthält und der Gehalt an (B) 0,01 bis 20 Massen-%, bezogen auf (A), beträgt.

6. Wasserabsorbierendes Mittel gemäß einem der Ansprüche 1 bis 5, wobei das verwendete Wasser ein Vernetzungsmittel (C) mit zwei oder mehreren funktionellen Gruppen, die mit einer funktionellen Gruppe von (A) reaktiv sind, enthält und das Verhältnis von (C) 0,003 bis 5,0 Massen-%, bezogen auf (A), beträgt.

7. Wasserabsorbierendes Mittel gemäß Anspruch 6, wobei das Vernetzungsmittel (C) eine Polyglycidylverbindung ist.

8. Wasserabsorbierendes Mittel gemäß einem der Ansprüche 1 bis 7, wobei der Flächendruck 100 kg/cm² bis 10 t/cm² beträgt oder der lineare Druck 50 kg/cm bis 5 t/cm beträgt.

9. Wasserabsorbierendes Mittel gemäß einem der Ansprüche 1 bis 8, wobei das wasserabsorbierende Mittel nach dem Pressformen eine Dichte von 0,4 bis 1,5 g/cm³ aufweist.

10. Wasserabsorbierendes Mittel gemäß einem der Ansprüche 1 bis 9, wobei die Teilchengröße nach dem Pressformen so eingestellt wird, dass das wasserabsorbierende Mittel nicht weniger als 90 Massen-% an Teilchen mit einem Durchmesser von 100 bis 850 µm umfasst.

11. Wasserabsorbierendes Mittel, umfassend ein Gemisch des wasserabsorbierenden Mittels nach einem der Ansprüche 1 bis 10 und eines pulverförmigen wasserabsorbierenden Harzes (A'), welches nicht pressgeformt ist und welches nicht weniger als 90 Massen-% an Teilchen mit einem Durchmesser von 100 bis 850 µm umfasst.

12. Wasserabsorbierendes Mittel gemäß Anspruch 11, wobei das wasserabsorbierende Harz (A') 10 bis 90 Massen-% des Gesamtgemisches stellt.

13. Verfahren zur Herstellung eines wasserabsorbierenden Mittels, welches umfasst Mischen von Wasser mit einem pulverförmigen wasserabsorbierenden Harz (A), das nicht weniger als 30 Massen-% an feinen Teilchen mit einem Durchmesser von 150 µm oder weniger umfasst, und Pressformen des Gemisches unter einem Flächendruck von nicht weniger als 50 kg/cm² oder einem linearen Druck von nicht weniger als 25 kg/cm.

14. Verfahren zur Herstellung eines wasserabsorbierenden Mittels gemäß Anspruch 13, weiterhin umfassend Trocknen und/oder Pulverisieren des pressgeformten Gemisches.

15. Verfahren zur Herstellung eines wasserabsorbierenden Mittels gemäß Anspruch 13 oder 14, wobei das verwendete Wasser ein wasserlösliches und/oder in Wasser dispergierbares Harz (B) enthält und der Gehalt an (B) 0,01 bis 20 Massen-%, bezogen auf (A), beträgt.

16. Verfahren zur Herstellung eines wasserabsorbierenden Mittels gemäß einem der Ansprüche 13 bis 15, wobei das verwendete Wasser ein Vernetzungsmittel (C) mit zwei oder mehreren funktionellen Gruppen, die mit einer Carboxylgruppe reaktiv sind, enthält und das Verhältnis von (C) 0,003 bis 5,0 Massen-%, bezogen auf (A), beträgt.

17. Verfahren zur Herstellung eines wasserabsorbierenden Mittels gemäß Anspruch 13 oder 14, wobei das wasserabsorbierende Harz (A) vor dem Mischen mit Wasser mit mindestens einem feinen teilchenförmigen anorganischen Material (D), ausgewählt aus Siliziumdioxid, Aluminiumoxid und Titandioxid, gemischt wird.

18. Verfahren zur Herstellung eines wasserabsorbierenden Mittels, welches umfasst Pulverisieren des nach einem der Ansprüche 13 bis 16 hergestellten wasserabsorbierenden Mittels und Einstellen der Teilchengröße, so dass das wasserabsorbierende Mittel nicht weniger als 90 Massen-% an Teilchen mit einem Durchmesser von 100 bis 850 µm umfasst.

19. Verfahren zur Herstellung eines wasserabsorbierenden Mittels gemäß Anspruch 17, welches weiterhin umfasst Mischen des wasserabsorbierenden Mittels mit einem pulverförmigen wasserabsorbierenden Harzpulver (A'), welches nicht pressgeformt ist und nicht weniger als 90 Massen-% an Teilchen mit einem Durchmesser von 100 bis 850 µm umfasst.

20. Verfahren zur Herstellung eines wasserabsorbierenden Mittels gemäß Anspruch 19, wobei der Gehalt an (A') in dem Gemisch 10 bis 90 Massen-% des Gesamtgemisches beträgt.

## Revendications

1. Agent absorbant l'eau ayant un diamètre de particule moyen de 200 à 1000 µm, que l'on peut obtenir par moulage par compression d'une résine en poudre absorbant l'eau (A) comprenant au moins 30 % en masse de particules fines ayant un diamètre de 150 µm ou moins, sous une pression de face d'au moins 50 kg/cm² ou une pression linéaire d'au moins 25 kg/cm en présence d'eau.

2. Agent absorbant l'eau selon la revendication 1, dans lequel la production de l'agent absorbant l'eau comprend en outre le séchage et/ou la pulvérisation.

3. Agent absorbant l'eau selon la revendication 1 ou 2, dans lequel la résine absorbant l'eau (A) est une résine absorbant l'eau anionique que l'on peut obtenir par polymérisation dans une solution aqueuse en présence d'un agent de réticulation, en utilisant des acides acryliques et des sels d'acide acrylique d'un métal alcalin comme principaux composants des unités monomères.

4. Agent absorbant l'eau selon l'une quelconque des revendications 1 à 3, dans lequel le rapport de l'eau est de 3 à 60 % par rapport à la résine absorbant l'eau (A) sur une base en masse.

5. Agent absorbant l'eau selon l'une quelconque des revendications 1 à 4, dans lequel l'eau utilisée contient une résine hydrosoluble et/ou dispersible dans l'eau (B), et la teneur en (B) est de 0,01 à 20 % en masse par rapport à (A).

6. Agent absorbant l'eau selon l'une quelconque des revendications 1 à 5, dans lequel l'eau utilisée contient un agent de réticulation (C) ayant deux ou plusieurs groupes fonctionnels réactifs avec un groupe fonctionnel de (A), et le rapport de (C) est de 0,003 à 5,0 % en masse par rapport à (A).

7. Agent absorbant l'eau selon la revendication 6, dans lequel l'agent de réticulation (C) est un composé polyglycidylique.

8. Agent absorbant l'eau selon l'une quelconque des revendications 1 à 7, dans lequel la pression de face est de 100 kg/cm² à 10 tonnes/cm² ou la pression linéaire est de 50 kg/cm à 5 tonnes/cm.

9. Agent absorbant l'eau selon l'une quelconque des revendications 1 à 8, dans lequel l'agent absorbant l'eau après le moulage par compression a une densité de 0,4 à 1,5 g/cm³.

10. Agent absorbant l'eau selon l'une quelconque des revendications 1 à 9, dans lequel la taille de particule est ajustée après le moulage par compression de telle manière que l'agent absorbant l'eau comprend au moins 90 % en masse de particules ayant un diamètre de 100 à 850 µm.

11. Agent absorbant l'eau comprenant un mélange de l'agent absorbant l'eau selon l'une quelconque des revendications 1 à 10, et une résine en poudre absorbant l'eau (A') qui n'est pas moulée par compression et comprend au moins 90 % en masse de particules ayant un diamètre de 100 à 850 µm.

12. Agent absorbant l'eau selon la revendication 11, dans lequel la résine absorbant l'eau (A') est 10 à 90 % en masse du mélange total.

13. Procédé de production d'un agent absorbant l'eau, qui comprend le mélange de l'eau avec une résine en poudre absorbant l'eau (A) comprenant au moins 30 % en masse de particules fines ayant un diamètre de 150 µm ou moins, et le moulage par compression du mélange sous une pression de face d'au moins 50 kg/cm² ou une pression linéaire d'au moins 25 kg/cm.

14. Procédé de production d'un agent absorbant l'eau selon la revendication 13, comprenant en outre le séchage et/ou la pulvérisation du mélange moulé par compression.

15. Procédé de production d'un agent absorbant l'eau selon la revendication 13 ou 14, dans lequel l'eau utilisée contient une résine hydrosoluble et/ou dispersible dans l'eau (B), et la teneur en (B) est de 0,01 à 20 % en masse par rapport à (A).

16. Procédé de production d'un agent absorbant l'eau selon l'une quelconque des revendications 13 à 15, dans lequel l'eau utilisée contient un agent de réticulation (C) ayant deux ou plusieurs groupes fonctionnels réactifs à un groupe carboxyle, et le rapport de (C) est de 0,003 à 5,0 % en masse par rapport à (A).

17. Procédé de production d'un agent absorbant l'eau selon la revendication 13 ou 14, dans lequel la résine absorbant l'eau (A) est mélangée avec au moins un matériau inorganique particulaire fin (D) choisi parmi la silice, l'alumine et le dioxyde de titane avant le mélange avec l'eau.

18. Procédé de production d'un agent absorbant l'eau, qui comprend la pulvérisation de l'agent absorbant l'eau comme produit selon l'une quelconque des revendications 13 à 16 et l'ajustement de la taille de particule pour comprendre au moins 90 % en masse de particules ayant un diamètre de 100 à 850 µm.

19. Procédé de production d'un agent absorbant l'eau selon la revendication 17, qui comprend en outre le mélange de l'agent absorbant l'eau avec une poudre de résine absorbant l'eau en poudre (A'), qui n'est pas moulée par compression et comprend au moins 90 % en masse de particules ayant un diamètre de 100 à 850 µm.

20. Procédé de production d'un agent absorbant l'eau selon la revendication 19, dans lequel la teneur en (A') dans le mélange est de 10 à 90 % en masse du mélange total.
